# EUROPEAN PATENT APPLICATION

(11) **EP 1 522 940 A2**
(43) Date of publication of application: **13.04.2005**
(21) Application number: 04021052.8
(22) Date of filing: 03.09.2004
(51) Int. Cl.: G06F 17/60

(54) **Self-describing business document collaboration protocols**

(30) Priority: 08.10.2003 US 509630 P; 06.02.2004 US 773924
(71) Applicant: MICROSOFT CORPORATION, Redmond, Washington 98052 (US)
(72) Inventor: Greef, Arthur R., Redmond Washington 98052 (US); Meleshko, Andrey A., Redmond Washington 98052 (US); Baker, Edmund K., Redmond Washington 98052 (US); Comstock, Jeff D., Redmond Washington 98052 (US); Chu, Zhonghua, Redmond Washington 98052 (US)
(74) Representative: Grünecker, Kinkeldey, Stockmair & Schwanhäusser Anwaltssozietät

(57) **Abstract**

A computer readable medium having instructions for processing information is provided. The instructions include a business entity module defining the structure of business entities exchanged in an action sequence, an entity action module defining the action sequence of related actions used in a business transaction and a transaction document module creating a corresponding defining documents based on the action sequence and the business entity module.

## Description

### CROSS REFERENCE TO RELATED APPLICATION

The present application is based on and claims the benefit of U.S. provisional patent application Serial No. 60/509,630, filed October 8, 2003, the content of which is hereby incorporated by reference in its entirety.

### BACKGROUND OF THE INVENTION

The present invention relates to the collaborative exchange of business documents in a business network computing environment. More specifically, the present invention relates to establishing a business-to-business process coordination protocol (business-to-business transaction protocol) that governs the exchange of business documents between business partners communicating via a business network.

Businesses have typically used a variety of mechanisms to control and analyze business operations processes such as accounting, payroll, human resources, employee tracking, customer relations tracking, etc. Tools that support, control and coordinate these processes are often implemented using computer software. For example, a software package may manage business accounting and other software packages might be responsible for receiving new orders and yet another software package will track warehouse inventory while a further software package handles order fulfillment and shipment. In another environment, a business software package operated by one business will need to exchange data with a software package operated by another business to allow a business-to-business transaction to occur.

Current business-to-business transaction implementations use various document exchange and communications network processes to carry out transactions between business partners. While the current processes can be effective, their implementation can be error prone as well as time and cost prohibitive since many of the processes are not coordinated across business partners by a continuous sequence of communication document exchanges that are governed by the rules of a business collaboration protocol. As a result, it is difficult for business application developers to customize, implement, test and maintain their computer implementation of the document exchange protocol.

For example, an order-to-cash process can include a sequence of communication documents between a supplier and a customer using a price list, order form, order acknowledgement form, shipping notice and invoice. If these documents are not integrated into their business operations processes, errors can result due to manual data entry and inefficient processes result from a plurality of documents transferring between partners. Thus, developing a sequence of linked transaction documents would decrease the cost and time to complete business transactions. In addition, allowing business application developers to define all parts (sending and receiving) of customized transaction sequences would allow a more robust, user-friendly business networking environment that is more time and cost effective to implement and maintain.

### SUMMARY OF THE INVENTION

A computer readable medium having instructions for processing information is provided. The instructions include a business entity module defining the structure of business entities exchanged in an action sequence, an entity action module defining the action sequence of related actions used in a business transaction and a transaction document module defining a plurality of transaction documents and creating a corresponding document based on the action sequence and the business entity module.

Another aspect of the present invention is a method for establishing a communication protocol between a first computer and a second computer. The method includes identifying a plurality of documents associated with a transaction and defining an action for action sequence for the plurality of documents. Additionally, one of the plurality of documents is created based on the action sequence.

Yet a further aspect of the present invention includes a business network having a first computer with a memory including a process template. The process template includes a business entity module defining a structure of business entities exchanged in an action sequence and an entity action module defining the action sequence of related actions that can be performed on the business entities. A transaction document module defines transaction documents and creates a corresponding document based on the business entity's module and the action sequence. The network also includes a second computer having a memory including a copy of the process template. The second computer also performs actions based on the process template and the relationship between the first computer and the second computer.

### BRIEF DESCRIPTION OF THE DRAWINGS

FIG. 1 illustrates a general computing environment.
FIG. 2 illustrates a general business networking environment.
FIG. 3 is a block diagram of two servers linked in a business networking environment.
FIG. 4 is a block diagram of a process template.
FIG. 5 is a flow diagram of transaction documents in a customer/supplier business transaction protocol.

### DETAILED DESCRIPTION OF ILLUSTRATIVE EMBODIMENTS

The present invention relates to implementation of business logic in computer software. Although herein described with reference to implementation of business logic used in business transactions, the present invention may also be applied to other types of logic that crosscuts several properties on objects in general. However, prior to discussing the present invention in greater detail, one embodiment of an illustrative environment in which the present invention can be used will be discussed.

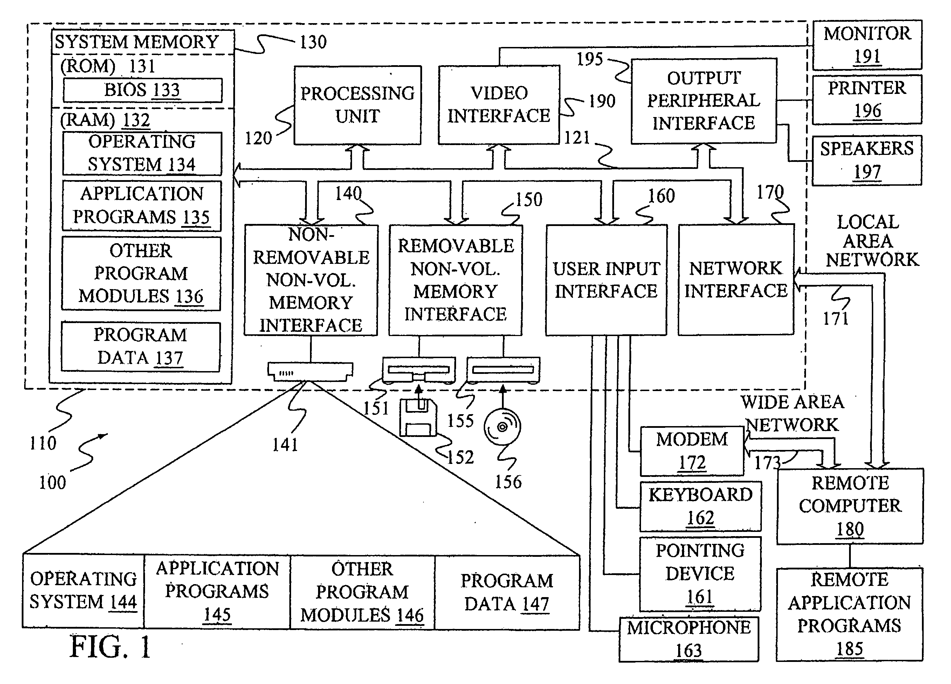

FIG. 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices. Tasks performed by the programs and modules are described below and with the aid of figures. Those skilled in the art can implement the description and figures as processor executable instructions, which can be written on any form of a computer readable medium.

With reference to FIG. 1, an exemplary system for implementing the invention includes a general purpose computing device in the form of a computer 110. Components of computer 110 may include, but are not limited to, a processing unit 120, a system memory 130, and a system bus 121 that couples various system components including the system memory 130 to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies.

A user may enter commands and information into the computer 110 through input devices such as a keyboard 162, a microphone 163, and a pointing device 161, such as a mouse, trackball or touch pad. Other input devices (not shown) may include a joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195.

The computer 110 may operate in a networked environment using logical connections to one or more remote computers, such as a remote computer 180. The remote computer 180 may be a personal computer, a hand-held device, a server, a router, a network PC, a peer device or other common network node, and typically includes many or all of the elements described above relative to the computer 110. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user-input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on remote computer 180. It will be appreciated that the network connections shown are exemplary and other means of establishing a communications link between the computers may be used.

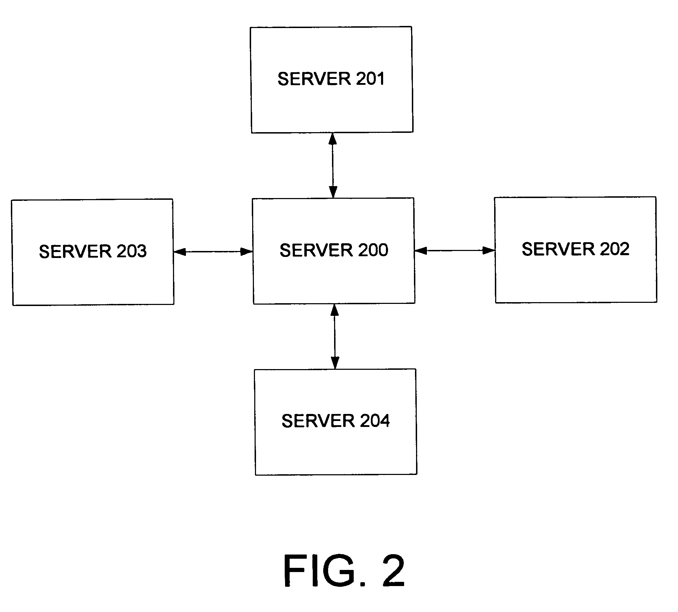

FIG. 2 illustrates a simplified block diagram of a business network environment. In the network environment, a hub business server 200 is connected to a number of other spoke business servers including server 201, server 202, server 203 and server 204. Business partners are associated with each of the servers 201-204 and have a business relationship with a hub partner associated with server 200. In one example, the hub partner is a supplier while the other spoke partners are customers of the hub partner.

In accordance with one embodiment of the present invention, the hub partner can setup and define a process template on server 200 that defines a protocol for carrying out a business transaction that includes a plurality of transaction documents. Spoke servers 201-204 can request and retain a copy of the process template from the hub server or otherwise can have access to the process template. Using the process template, business partners can easily align and integrate their internal business processes. This alignment and integration is achieved by creating a set of protocol-rules that govern/control the sending and receiving of business transaction documents between business partners who operate in unison to provide a coordinated document exchange sequence. Additionally, the process template defines valid documents and actions so that information entered into the documents and actions on the documents are validated against the process template before exchange.

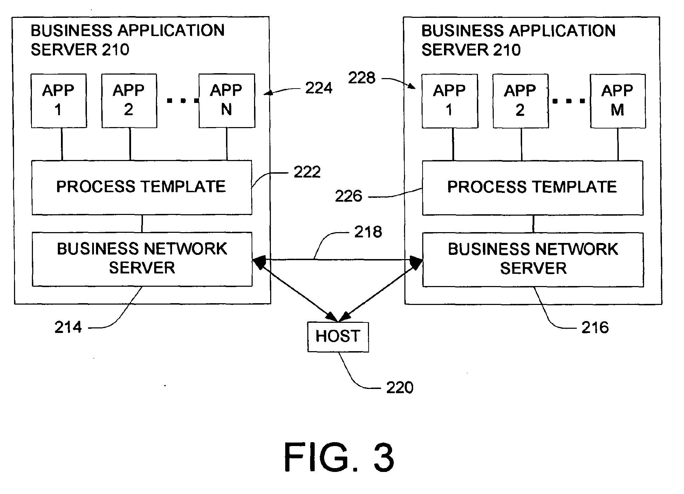

FIG. 3 is a more detailed block diagram of a collaboration environment between two business partners that utilize process templates on associated application servers to exchange documents related to business transactions. Application server 210 and application server 212 both include business network server software modules 214 and 216, respectively. The respective business server software modules 214 and 216 can communicate with each other through a variety of different communication means. For example, a peer-to-peer connection 218 can be established between servers 210 and 212. In another embodiment, the business server software modules 214 and 216 can communicate through an intermediate host 220, that is part of a virtual private network (for example Microsoft Business Network provided by Microsoft Corporation of Redmond, Washington) or a public network such as the Internet.

Server 210 includes a plurality of process templates 222 and a plurality of applications 224. Similarly, server 212 includes a plurality of process templates 226 and a plurality of applications 228. In one embodiment, process templates 222 and 226 include a set of business document definitions, one or more collaboration definitions and one or more application integration profiles. The set of document definitions identify documents associated with the process template, for example a price list or shipping notice. The collaboration definitions define how the documents are related, viewed and created. For example, a definition can provide how a supplier's price list is related to a purchase order, how a purchase order is created from a price list, how a purchase order is viewed by a user and how the purchase order is routed to the supplier. Furthermore, the application integration profiles define how the process template and associated documents are integrated with various applications.

In one mode of operation for utilizing process templates, server 210 is a process template publisher hub-server, while server 212 is a process template subscriber. The process template can be propagated by the publisher to selected subscribers, for example a subscriber company that has agreed to collaborate with a publisher company. The process template publisher can host a process template that is propagated to the subscribers if the subscriber receives a transaction document for which it has no local copy of the process template's collaboration protocol. The process template defines how the document can be related, viewed, transformed and acknowledged. Using the process template, a subscriber enters into a collaborative transaction document exchange relationship with the publisher to integrate their business processes with those of the publisher.

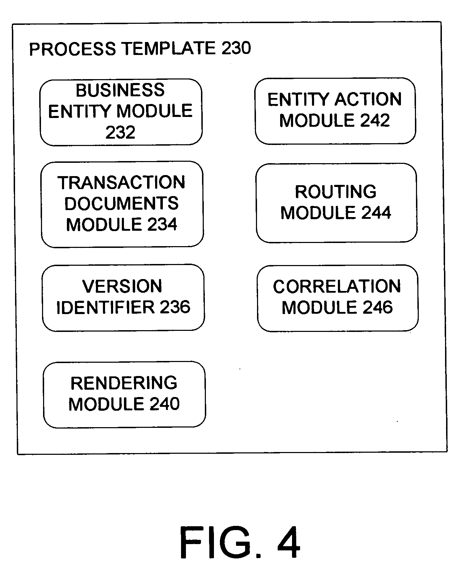

FIG. 4 pictorially illustrates an exemplary process template 230 developed for aligning and integrating business processes. Process template 230 can include various elements to define a sequence to be followed when performing a business process. Process templates define a combination of business entities and transaction documents to carryout the business collaboration protocol.

Entities include information building blocks for a specific portion of the business collaboration protocol such as an order, an invoice, or a shipping notice. Transaction documents are electronic documents exchanged between business partners and can contain information required to execute a particular action on the entities such as the completion of a sales order. Transaction documents include a reference to process template 230 for tracking, correlating and rendering of the documents as well as for acknowledging a received transaction document.

Business entity module 232 defines a valid structure for entities and transaction documents associated with process template 230 for performing an action sequence to complete a business process. The structure of the entities pertains to variables, schemas, etc. that make up each of the transaction documents. The transaction documents can be created with an associated transaction document module 234 based on an entity and a defined sequence of actions.

To further define the action sequence, process template 230 includes a version identifier 236, a rendering module 240, an entity action module 242, a routing module 244 and a correlation module 246 that operate in relation with entity module 232 and transaction documents module 234. Each of the elements in process template 230 enables companies to establish collaborative solutions with their trading partners.

Version identifier 236 is a reference to a particular version for process template 230. Using version identifier 236, a spoke-server can determine whether the particular version of the process template is stored thereon. If a transaction document is received by the spoke-server and the associated process template is not stored locally, the spoke-server then requests that the process template be sent. After the process template is stored, a collaborative relationship is established that is governed by the protocol rules defined by elements of the process template.

Rendering module 236 defines how each of the transaction documents is rendered in various applications. For example, transaction documents may be rendered in an electronic mail program such as Microsoft Outlook or in another program such as Microsoft Excel or Microsoft InfoPath. By providing these rendering definitions, the process template enables easy integration with various client and back office applications.

Entity action module 242 defines valid actions that can be performed on the business entities defined by business entity module 232 associated with process template 230. Such actions include originating, acknowledging and preparing business entities. Transaction documents are used to communicate actions on the business entities. For example, a customer in a supplier/customer relationship would be allowed to originate a purchase order while a supplier would be allowed to acknowledge the purchase order based on entity action module 242. Another example is when a customer would be allowed to prepare a purchase order from a price list.

Routing module 244 defines routing rules for the transaction documents. These routing rules aid in providing and establishing a routing protocol for each of the transaction documents defined by module 234. Correlation module 246 defines how each of these transaction documents are related in a history. For example, a purchase order followed by a sequence of purchase order acknowledgement, shipping manifest and goods receipt transaction documents are correlated in a transaction history that can be viewed as a business transaction.

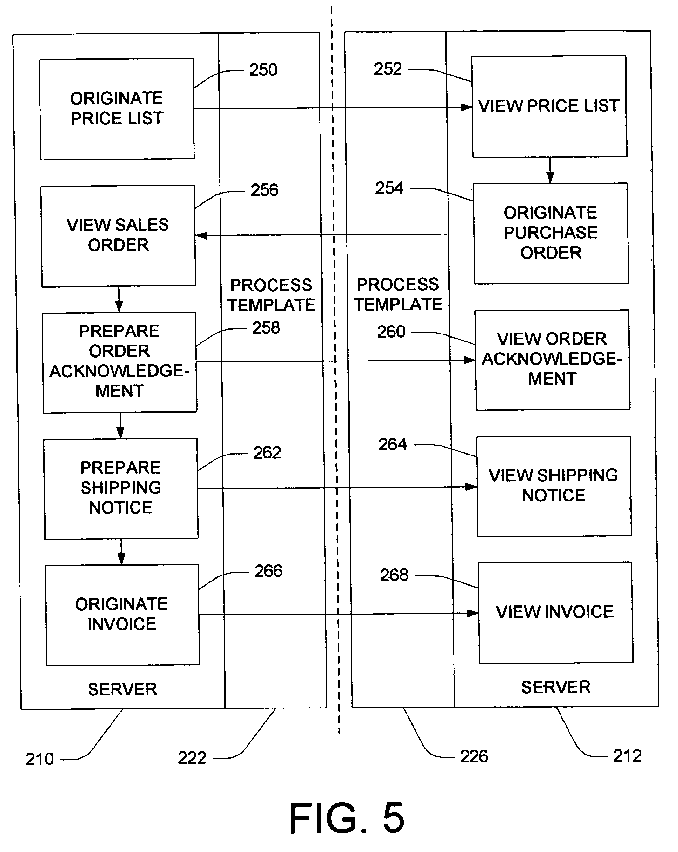

FIG. 5 illustrates an exemplary flow diagram for the exchange of documents in an orders-to-cash business transaction. In this exemplary flow diagram, server 210 represents a supplier and server 212 represents a customer. Process template 222 is the master process template stored on the hub-server and process template 226, a copy of the master process template, can include information related to whether the associated server is a supplier or customer and handle documents accordingly as discussed below.

At step 250, a price list of available products is originated on server 210. In one embodiment, the price list is created using the process template 222 and a spreadsheet program. Process template 222 knows that the price list origination action is associated with a supplier and thus only allows the supplier to prepare and transmit the price list to prevent errors since only suppliers provide price lists to customers.

Using process template 222, the price list is then routed to server 212. If server 212 does not have access to the process template 222 or a local copy of the process template 222 such as copy 226, a request that the process template be sent to server 212 is made.

Process template 222 can use a customer's business identifier in order to figure out where the price list should be routed. For example, a partner operating server 210 can specify a contact in a productivity program such as Microsoft Outlook. Process template 222 can integrate with the program to identify the contact's routing information.

Additionally, process template 222 can include validation rules for the price list created before sending the document to server 212. The copy of process template 226, after receiving the price list, renders the price list so it may be viewed at step 252. The rendering is performed based on rendering module 240 (Fig. 4) and information related to process template 226 being associated with a customer. After viewing the price list, server 212 can originate a purchase order at step 254 based on an action received from the customer. The copy of process template 226, knowing it is associated with a customer, can present menu items in the price list to create and originate a purchase order.

After the purchase order has been originated on server 212, the order is routed by process template 226 to server 210. After receiving the order, process template 222 can render a sales order on server 210, where it can be viewed at step 256. Since process template 222 is associated with a supplier, the document appears as a sales order.

At step 258, an order acknowledgement is prepared. The order acknowledgement is then sent to server 212 where it can be viewed at step 260. When the products that were ordered have been shipped, server 210 can prepare a shipping notice at step 262. The shipping notice can then be sent to server 212 where it can be viewed at step 264. Additionally, an invoice can be originated at step 266 and sent to server 212 where it can be viewed at step 268.

As a result of using the process template described above, an action sequence can be defined to easily integrate and align business processes between partners. The action sequence defines what actions are performed and in what sequence. The process template can be implemented in various business environment including a company and its financier, carrier, logistics provider, etc. The service industries such as a dentist/insurance company relationship.

Those familiar with software patterns and practices will recognize that other processes and transactions can be implemented using the process templates discussed above. For example, a supplier visibility process template would enable a manufacturer to the production status of individual order line items from suppliers. For example, a customer can send a work-in-process request to a manufacturer/supplier. The supplier can respond with a status for each of the items in the order and respond accordingly.

Although the present invention has been described with reference to particular embodiments, workers skilled in the art will recognize that changes may be made in form and detail without departing from the spirit and scope of the invention.

## Claims

1. A computer readable medium having instructions for processing information, the instructions comprising:
a business entity module defining a structure of business entities exchanged in an action sequence;
an entity action module defining the action sequence of related actions that can be performed on the business entities; and
a transaction document module defining transactions documents and creating a corresponding transaction document based on the business entity module and the action sequence.

2. The computer readable medium of claim 1, wherein the instructions further comprise:
a correlation module defining how each of the entities are related and recorded in a history.

3. The computer readable medium of claim 1, wherein the instructions further comprise:
a version identifier identifying a particular version of the business entity module, the action sequence and the transaction document module.

4. The computer readable medium of claim 1, wherein the instructions further comprise:
a routing module defining routing rules for each of the transaction documents.

5. A method for establishing a communication protocol between a first computer and a second computer, comprising:
identifying a plurality of documents associated with a transaction;
defining an action sequence for the plurality of documents; and
creating one of the plurality of documents based on the action sequence.

6. The method of claim 5 and further comprising:
checking a version identifier to see if the first computer and second computer include the same version of a process template related to the action sequence.

7. The method of claim 6 and further comprising;
requesting a copy of the process template with the second computer if the second computer does not include the same version of the process template.

8. The method of claim 5 and further comprising:
rendering a document based on a set of rendering rules for each of the documents.

9. The method of claim 5 and further comprising:
defining actions that can be performed on each of the documents.

10. The method of claim 9 and further comprising:
creating one of the documents based on a relationship between the first computer and the second computer.

11. The method of claim 10 wherein the first computer is associated with a supplier and the second computer is associated with a customer.

12. The method of claim 5 and further comprising:
routing the documents from the first computer to the second computer based on routing rules.

13. The method of claim 5 and further comprising:
integrating information in each of the documents into an application on one of the first computer and the second computer.

14. A business network, comprising:
a first computer having a memory including a process template, the process template comprising:
a business entity module defining a structure of business entities exchanged in an action sequence;
an entity action module defining the action sequence of related actions that can be performed on the business entities; and
a transaction document module defining transaction documents and creating a corresponding document based on the business entities module and the action sequence; and
a second computer having a memory including a copy of the process template and performing actions based on the process template and a relationship between the first computer and the second computer.

15. The network of claim 14, wherein the process template further comprises:
a correlation module defining how each of the entities are related and recorded in a history.

16. The network of claim 14, wherein the process template further comprises:
a version identifier identifying a particular version of the business entity module, the action sequence and the transaction document module.

17. The network of claim 16, wherein the second computer is adapted to check the version identifier to see if the particular version of the process template is stored thereon and request a new copy of the particular version of the process template if the second computer does not include the particular version of the process template.

18. The network of claim 14, wherein the process template further comprises:
a routing module defining routing rules for each of the transaction documents.

19. The network of claim 14, wherein the relationship includes the first computer being associated with a supplier and the second computer being associated with a customer.
